Europäisches Patentamt

European Patent Office

Office européen des brevets

(19)

(11) **EP 1 257 084 B1**

(12) **EUROPEAN PATENT SPECIFICATION**

(45) Date of publication and mention
of the grant of the patent:
**09.06.2004 Bulletin 2004/24**

(51) Int Cl.⁷: **H04L 9/32**

(21) Application number: **01309740.7**

(22) Date of filing: **19.11.2001**

(54) **Message authentication system and method**

System und Verfahren zur Nachrichtenauthentisierung

Système et procédé pour l'authentification de messages

(84) Designated Contracting States:
**AT BE CH CY DE DK ES FI FR GB GR IE IT LI LU MC NL PT SE TR**

(30) Priority: **11.05.2001 US 854251**

(43) Date of publication of application:
**13.11.2002 Bulletin 2002/46**

(60) Divisional application:
**03021543.8 / 1 387 524**

(73) Proprietor: **LUCENT TECHNOLOGIES INC.**
**Murray Hill, New Jersey 07974-0636 (US)**

(72) Inventor: **Patel, Sarvar**
**Montville, New Jersey 07045 (US)**

(74) Representative:
**Watts, Christopher Malcolm Kelway, Dr. et al**
**Lucent Technologies NS UK Limited,**
**5 Mornington Road**
**Woodford Green Essex, IG8 0TU (GB)**

(56) References cited:
- **BELLARE M ET AL: "KEYING HASH FUNCTIONS FOR MESSAGE AUTHENTICATION" ADVANCES IN CRYPTOLOGY - CRYPTO '96. 16TH. ANNUAL INTERNATIONAL CRYPTOLOGY CONFERENCE. SANTA BARBARA, AUG. 18 - 22, 1996. PROCEEDINGS, PROCEEDINGS OF THE ANNUAL INTERNATIONAL CRYPTOLOGY CONFERENCE (CRYPTO), BERLIN, SPRINGER, DE, vol. CONF. 16, 18 August 1996 (1996-08-18), pages 1-15, XP000626584 ISBN: 3-540-61512-1**
- **MENEZES, OORSCHOT, VANSTONE: "Handbook of Applied Cryptography" 1996 , CRC PRESS LLC , USA XP002198439 * page 332 - page 333, paragraph 1 * * page 352, Section 9.5 * * page 360 * * page 364, Section 9.6.3 ***

**Description**

BACKGROUND OF THE INVENTION

**1. Field of The Invention**

The present invention relates to communications and, more specifically, to the authentication of messages.

**2. Description of Related Art**

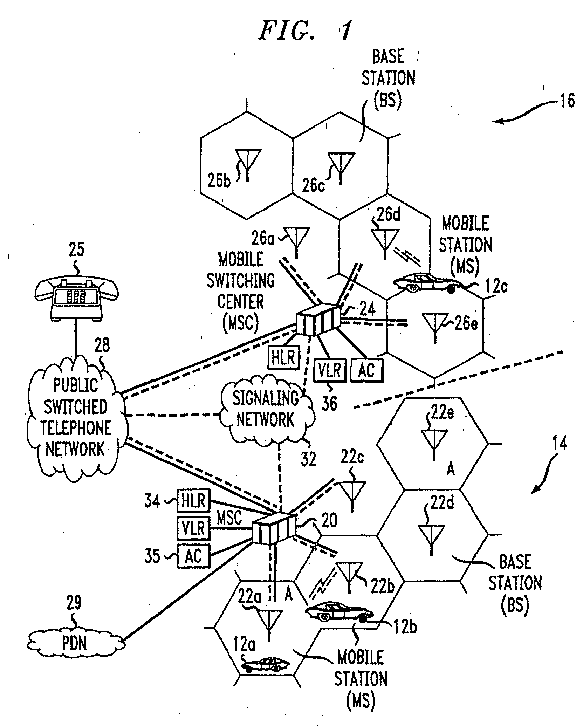

FIG. 1 depicts a schematic diagram of first and second wireless communications systems which provide wireless communications service to wireless units (e.g., wireless units 12a-c) that are situated within the geographic regions 14 and 16, respectively. A Mobile Switching Center (e.g. MSCs 20 and 24) is responsible for, among other things, establishing and maintaining calls between the wireless units, calls between a wireless unit and a wireline unit (e.g., wireline unit 25), and/or connections between a wireless unit and a packet data network (PDN), such as the internet. As such, the MSC interconnects the wireless units within its geographic region with a public switched telephone network (PSTN) 28 and/or a packet data network (PDN) 29. The geographic area serviced by the MSC is divided into spatially distinct areas called "cells." As depicted in FIG. 1, each cell is schematically represented by one hexagon in a honeycomb pattern; in practice, however, each cell has an irregular shape that depends on the topography of the terrain surrounding the cell.

Typically, each cell contains a base station (e.g. base stations 22a-e and 26a-e), which comprises the radios and antennas that the base station uses to communicate with the wireless units in that cell. The base stations also comprise the transmission equipment that the base station uses to communicate with the MSC in the geographic area. For example, MSC 20 is connected to the base stations 22a-e in the geographic area 14, and an MSC 24 is connected to the base stations 26a-e in the geographic region 16. Within a geographic region, the MSC switches calls between base stations in real time as the wireless unit moves between cells, referred to as call handoff. Depending on the embodiment, a base station controller (BSC) can be a separate base station controller (BSC) (not shown) connected to several base stations or located at each base station, which administers the radio resources for the base stations, and relays information to the MSC. ,

The MSCs 20 and 24 use a signaling network 32, such as a signaling network conforming to the standard identified as TIA/EIA-41-D entitled "Cellular Radiotelecommunications Intersystem Operations," December 1997 ("IS-41"), which enables the exchange of information about the wireless units which are roaming within the respective geographic areas 14 and 16. For example, a wireless unit 12a is roaming when the wireless unit 12a leaves the geographic area 14 of the MSC 20 to which it was originally assigned (e.g. home MSC). To ensure that a roaming wireless unit can receive a call, the roaming wireless unit 12a registers with the MSC 24 in which it presently resides (e.g., the visitor MSC) by notifying the visitor MSC 24 of its presence. Once a roaming wireless unit 12a is identified by a visitor MSC 24, the visitor MSC 24 sends a registration request to the home MSC 20 over the signaling network 32, and the home MSC 20 updates a database 34, referred to as the home location register (HLR), with the identification of the visitor MSC 24, thereby providing the location of the roaming wireless unit 12a to the home MSC 20. After a roaming wireless unit is authenticated, the home MSC 20 provides to the visitor MSC 24 a customer profile. Upon receiving the customer profile, the visitor MSC 24 updates a database 36, referred to as the visitor location register (VLR), to provide the same features as the home MSC 20. The HLR, VLR and/or the authentication center (AC) can be co-located at the MSC or remotely accessed.

In the Universal Mobile Telecommunications System (UMTS) and 3G IS-41, when a wireless unit places or receives a call, it is authenticated before it can proceed with the call. After being authenticated a 128 bit integrity key (IK), which was generated using a secret key, is activated and can be used in checking the integrity of a message sent between the wireless unit and the system or message authentication.

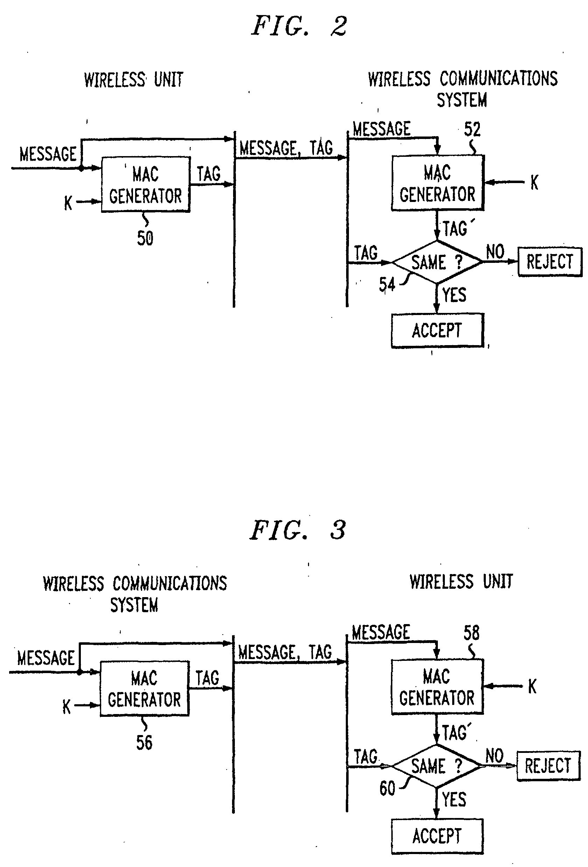

The design of good Message Authentication schemes is one of the important areas of cryptography. The goal in message authentication schemes is for one party to efficiently transmit a message to another party in such a way that the receiving party can determine whether or not the message he receives has been tampered with. FIG. 2 shows how message authentication is performed with a wireless unit in a wireless communications system. The setting involves two parties, the wireless unit and the wireless communications system, who have agreed on a secret key k. There are two algorithms used: a signing algorithm $S_k$ and a verification algorithm $V_k$. If the wireless unit wants to send a message M to the wireless communications system, then she first computes a tag or message authentication code (MAC), $\mu = S_k(M)$, using MAC generator 50. The unit sends the message and the tag pair (M,μ) to the wireless communications system, and upon receiving the pair (M,μ), the wireless communications system computes $V_k(M, \mu)$ which returns 1 if the MAC is valid, or returns 0 otherwise. It is shown in FIG. 2 that the wireless communications system inputs the message and the k into the MAC generator 52 which produces a tag', and a comparison 54 is made between

the tag ($\mu$) received from the wireless unit and the tag' generated at the system. If they are the same, the message is accepted as valid; otherwise, the message is rejected. Without knowledge of the secret key k, it is next to impossible for an adversary to construct a message and corresponding MAC that the verification algorithm will be accept as valid.

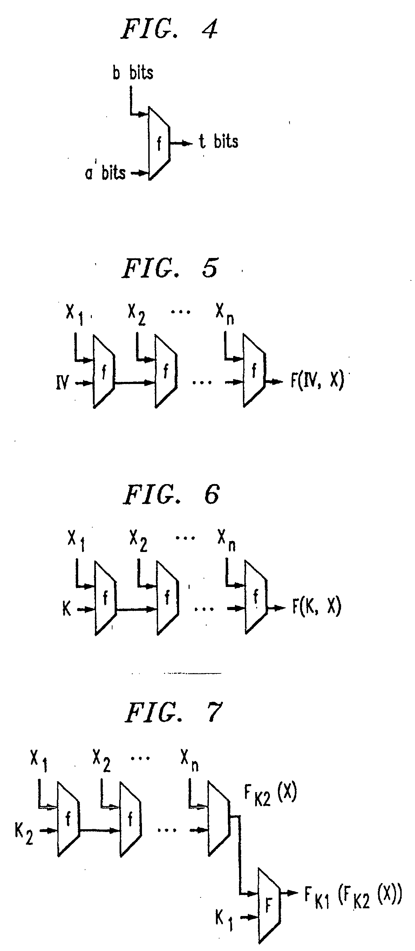

The same message authentication scheme is performed in the transmission of messages from the wireless communications scheme to the wireless unit. For example, FIG. 3 shows how the wireless communications system sends a protected message to a wireless unit by generating a tag with a MAC generator 56 using the message and a secret key k as inputs. The wireless communications system sends a message along with the tag to a wireless unit which inputs the message and the secret key k into a MAC generator 58 to generate a tag'. The wireless unit makes a comparison 60 between tag' and the tag received from the wireless communications system. If the tags match, the message is accepted as valid. If not, the message is rejected as being altered or invalid.

The security requirement for a Message Authentication Code can be explained as follows. An adversary forges a MAC if, when given the ability to query the MAC $S_k$, $V_k$, on chosen messages, where k is kept secret, the adversary can come up with a valid pair $(M^*, \mu^*)$ such that $V_k(M^*, \mu^*) = 1$ but the message $M^*$ was never made an input to $S_x$.

One common approach to message authentication commonly seen in practice involves the use of cryptographic hash functions. A hash function can be typically characterized as a function which maps inputs of one length to outputs of a shorter length. Moreover, it is difficult to find two inputs which will map to the same output. These MAC schemes based on cryptographic hash functions are good because they use fast and secure cryptographic building blocks. Typically, cryptographic Hash functions, F(x), are public, keyless, and collision-resistant functions which map inputs, x, of arbitrary lengths into short outputs. Collision-resistance implies that it should be computationally infeasible to find two messages $x_1$ and $x_2$ such that $F(x_1) = F(x_2)$. MD5, SHA-1, and RIPE-MD are widely used cryptographic hash functions. Along with collision-resistance, the hash functions are usually designed to have other properties both in order to use the function for other purposes and to increase the likelihood of collision-resistance.

Most cryptographic hash functions like MD5 and SHA-1 use an iterated construction where the input message is processed block by block. As shown in FIG. 4, the basic building block is called the compression function, f, which is a hash function that takes two inputs of size t and b and maps into a shorter output of length t. In MD 5, the t size input is 128 bits long and the b size input is 512 bits long. In SHA-1, the t size input is 160 bits long and the b size input is 512 bits long. The t sized input is called the chaining variable and the b sized input or payload or block is used to actually process the message x, b bits at a time. As shown in FIG. 5, the hash function F(x) then is formed by iterating the compression function f over the message m using $h_i$ as the chaining variable and $x_i$ as the payload according to the following steps:

1. Use an appropriate procedure to append the message length and pad to make the input a multiple of the block size b. The input can be broken into block size pieces $x = x_1,...,x_n$.
2. $h_o = IV$, a fixed constant.
3. For i = to n
4. $h_i = f(h_i-1, x_i)$
5. Output $h_n$ as F(x).

For example, in using a SHA-1 hash function, each call to the SHA-1 hash function has a 160 bit initial vector (IV) and takes a 512 bit input or payload which is mapped into a 160 bit output. The IV is set to the IV defined in the standard for SHA-1 hash function, referred to as National Institute of Standards and Technology, NIST FIPS PUB 180, "Secure Hash Standard," U.S. Department of Commerce, May 1993.

Cryptographic hash functions by design are keyless. However, since message authentication requires the use of a secret key, we need a method to key the hash function. One way to key the hash function is to use the secret key instead of the fixed and known IV. As shown in FIG. 6, the key k replaces the chaining variable in the compression function f(chainingvariable,x1) to form $f_k(x1) = f(k,x1)$ where x1 is of block size b. The iterated hash function F(IV,x) is modified by replacing the fixed IV with the secret key k to form $F_k(x) = F(k,x)$. Collision resistance for a keyed function is different than for keyless functions because the adversary cannot evaluate Fk(x) at any point without querying the user. This requirement is weaker than the standard collision requirement and hence we will call the function $F_k(x)$ to be weakly collision-resistant.

Menezes, Oorschot, Vanstone, HANDBOOK OF APPLIED CRYPTOGRAPHY, 1996, CRC Press LLC, USA XP002198439 generally describes iterated hash functions and keyed hash functions.

To improve the security of the keyed cryptographic hash function, a nested MAC function (NMAC) was developed which is defined as:

$$NMAC_k(x) = F_{k1}(F_{k2}(x)),$$

where the cryptographic hash function F is first keyed with the secret key $k_2$ instead of IV and the message x is iteratively hashed to the output of $F_{k2}(x)$. M. Bellare, R. Canetti, and H. Krawczyk, *Keying Hash Functions for Message Authentication*, Advances in Cryptology - Crypto '96 16th Annual International Crytology Conference. Santa Barbara, Aug. 18-22, 1996, Proceedings of the Annual International Cryptology Conference (Crypto), Berlin, Springer, DE (18-08-1196), CONF 16, 1-15 describes the nested hash constructions NMAC and HMAC. This output $F_{k2}(x)$ is then padded to a block size according to the padding scheme of F and then the result of $F_{k2}(x)$ is keyed with secret key $k_1$ and hashed with an outer hash function F as shown in FIG. 7. Thus, the NMAC key k has two parts k = ($k_1$, $k_2$). The following theorem about relating the security of NMAC to the security of the underlying cryptographic has function is proved in M. Bellare, R. Canetti, and H. Krawczyk, *Keying Hash Functions for Message Authentication,* cited above.

Theorem 1: In t steps and q queries if the keyed compression function f is an $\in_f$ secure MAC and the keyed iterated hash F is $\in_F$ weakly collision-resistant, then the NMAC function is a ($\in_f$ + $\in_F$) secure MAC.

The NMAC construction makes at least two calls to the compression function; the inner call to $F_{k2}(x)$ has the same cost as the keyless hash function F(x). Thus, the outer call to $F_{k1}$ is an extra call beyond that required by the keyless hash function. The outer function call is basically a call to the keyed compression function $f_{k1}$ since the *l* size output of $F_{k2}(x)$ can fit in the b size input to the compression function. For large x consisting of many blocks, the cost of the extra outer compression call is not significant. However, for small sized messages x, the extra outer compression function can in terms of percentage result in a significantly high inefficiency when compared to the unkeyed hash function. Table 1 shows the inefficiency for small x for the SHA-1 hash function. The number of compression calls needed by the underlying hash function and by NMAC are compared for various small x, increasing in 30 byte increments. The inefficiency of NMAC with respect to the underlying hash function is also noted in the table.

Table 1:

| Comparison in number of compression calls for short messages of various sizes | | | |
|---|---|---|---|
| x in 240 bit increments | # of f in F (x) | # of f in NMAC | % inefficiency |
| | | | |
| 240 | 1 | 2 | 100% |
| 480 | 2 | 3 | 50% |
| 720 | 2 | 3 | 50% |
| 960 | 3 | 4 | 33% |
| 1200 | 3 | 4 | 33% |
| 1440 | 3 | 4 | 33% |
| 1680 | 4 | 5 | 25% |
| 1920 | 4 | 5 | 25% |
| 2160 | 5 | 6 | 20% |
| 2400 | 5 | 6 | 20% |

As can be seen, the penalty for small messages can be large. In particular, for messages which fit within a block, the penalty is 100% because two compression function calls are required in NMAC versus one compression call by the underlying cryptographic hash function.

HMAC is a practical variant of NMAC for those implementations which do not have access to the compression function f but can only call the cryptographic hash function F with the message. For those implementations, the key cannot be placed in the chaining variable, and the function F is called with the fixed and known IV used in the initial compression function. The HMAC function is defined as:

$$HMAC_k(x) = F(\ \bar{k} \oplus opad,\ F(\ \bar{k} \oplus ipad,\ x))$$

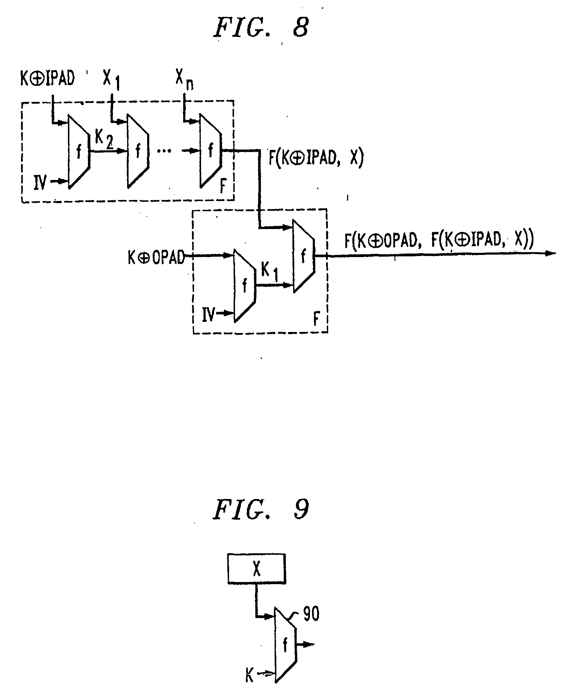

where a key k is used and $\bar{k}$ is the padding of k with zeroes to complete the b block size of the iterated hash function. The value $\bar{k}$ is bitwise exclusive ORed with opad, and the result is concatenated to the message x. The hash function F is called with the entire concatenated message. As shown in FIG. 8, after the first iteration of the compression function f, the key k2 is produced as k2 = f ( $\bar{k} \oplus$ ipad). After the hashed function F is complete, the resulting value F( $\bar{k} \oplus$ ipad, X) is produced. The hash function F is called again with a message comprising the value of $\bar{k} \oplus$ op'ad, a bitwise exclusive-or operation with $\bar{k}$ and opad. After the first iteration within the second call of the hash function F, the key k1 is obtained from the compression function f(IV, $\bar{k}$ ⊕ opad). The values ipad and opad are fixed constants as described in M. Bellare, R. Canetti, and H. Krawczyk, *Keying Hash Functions for Message Authentication,* In Proc. CRYPTO 96, Lecture Notes in Computer Science, Springer-Verlag, 1996. The second iteration within the second call to the hash function uses the compression function f(k1, F($\bar{k}$ ⊕ ipad, X)) to produce the HMAC function F($\bar{k}$ ⊕ opad, F($\bar{k}$ ⊕ ipad, x)).

By defining $k_1 = f(\bar{k} \oplus opad)$ and $k_2 = f(\bar{k} \oplus ipad)$, $HMAC_k(x)$ becomes $NMAC_{(k1,k2)}(x)$. HMAC is the internet standard for message authentication. As shown, HMAC's proof of security is related to NMAC and assumes the underlying cryptographic hash is (weakly) collision resistant and that the underlying compression function is a secure MAC when both are appropriately keyed. HMAC is efficient for long messages, however, for short messages the nested construction results in a significant inefficiency. For example, to MAC a message shorter than a block where access is not provided to the compression function, HMAC requires four calls to the compression function. Where access is permitted to the compression function, k 1 and k2 can be precomputed and inserted into the chaining variable of the compression function, thereby requiring two calls to the compression function. This inefficiency may be particularly high for some applications, like message authentication of signaling messages, where the individual messages may all fit within one or two blocks. Also for TCP/IP traffic it is well known that a large number of packets (e.g. acknowledgment) have sizes around 40 bytes which fit within a block of most cryptographic hashes. We propose an enhancement that allows both short and long messages to be message authenticated more efficiently than HMAC while also providing proofs of security.

## SUMMARY OF THE INVENTION

A method and system according to the invention are as set out in the independent claims. Preferred forms are set out in the dependent claims.

## BRIEF DESCRIPTION OF THE DRAWINGS

Other aspects and advantages of the present invention may become apparent upon reading the following detailed description and upon reference to the drawings in which:

FIG. 1 shows a general diagram of wireless communications systems for which the MAC generation system according to the principles of the present invention can be used;
FIG. 2 is a general diagram illustrating how a MAC is used to authenticate messages sent from a wireless unit to a wireless communications system;
FIG. 3 is a general diagram illustrating how a MAC is used to authenticate messages sent from a wireless communications system to a wireless unit;
FIG. 4 is a block diagram of a compression function f;
FIG. 5 is a block diagram illustrating the iterated construction of a hash function F given a compression function f;
FIG. 6 is a block diagram illustrating a keyed hash function;
FIG. 7 is a block diagram illustrating a nested hash function (NMAC);
FIG. 8 is a block diagram illustrating a variant of an NMAC function known as HMAC;
FIG. 9 is a block diagram of a single block case in the message authentication system according to principles of the present invention;
FIG. 10 shows a block diagram of a multiple block case in the message authentication system according to principles of the present invention;
FIGs. 11a and 11b show block diagrams of an ENMAC embodiment of the message authentication system according to principles of the present invention;
FIG. 12 shows a flow diagram of an ENMAC embodiment of the message authentication system according to principles of the present invention;
FIGs. 13a and 13b show block diagrams of an EHMAC embodiment of the message authentication system according to principles of the present invention;
FIGs. 14a and 14b show block diagrams of an SMAC embodiment of the message authentication system according to principles of the present; and
FIG. 15 shows a flow diagram for an SMAC embodiment of the message authentication system according to principles of the present invention.

## DETAILED DESCRIPTION

Illustrative embodiments of a MAC construction system and method according to the principles of the present invention is described below for processing messages of arbitrary length which provides improved efficiency. In the following description, the term hash function encompasses a compression function f and an iterated hash function F. A hash function can be keyless or keyed, whereby $F_k$ denotes a keyed iterated hash function and $f_k$ denotes a keyed compression function. Recall that $f_k(x)$ is the keyed compression function whose input block size is b bits and the output size is t bits, and the size of the chaining variable and hence the key size is also t bits. In accordance with one aspect of the present invention, depending on the size of the message, the MAC generator uses different hash function arrangements to generate the MAC. For example, the MAC generator could make a single iteration of a keyed compression function as the hash function if the message x (and any additional required bits) fits in an input block of the compression function f. For messages not fitting within the input block, the MAC generator uses nested hash functions. As shown in FIG.9, a message x is input into the compression function f with any required padding, message length fields, block indicator fields or other fields appended to the message x. If the message x (and any additional required bits) fits within the input block for the compression function, a single iteration of the keyed compression function f 90 is performed using the message x and a key k to produce a MAC $f_k(x)$ for the message x.

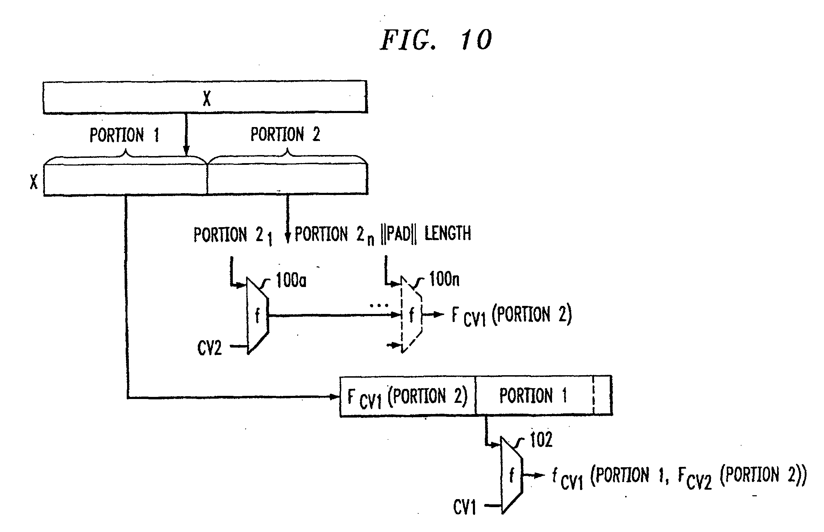

Otherwise, as shown in FIG. 10, if the message x (and any additional required bits) does not fit within an input block of the compression function f, the message block x is divided into portions, such as portion 1 and portion 2. Portions of the message block can be overlapping or non-overlapping sets of the bits making up the message x. In accordance with another aspect of the present invention, a first portion is used in the inner hash function F, and a second portion is used in the outer hash function, which is shown as a compression function $f_{cv1}$. For example, portion2 is provided to the inner hash function F where calls to or iterations of the compression function 100a to 100n (if needed) are made with blocks $portion2_1$ to $portion2_n$ of portion2, including any appended padding or fields, where n>=1. The initial iteration or call 100a to the compression function f uses a chaining variable CV2 which could be a key or a key derived from a key or the standard initial value for the hash function F depending on the embodiment. The result of the inner hash function Fcv2(portion2) is provided to the outer hash or compression function f (102) along with portion 1 of the entire message x and a chaining variable CV1. The chaining variable CV 1 could be a key or a key derived from a key or the standard initial value IV for the hash function F depending on the embodiment. The resulting value fcv1(portion1, Fcv2(portion2)) portion 1) can be used to produce the MAC used in message authentication.

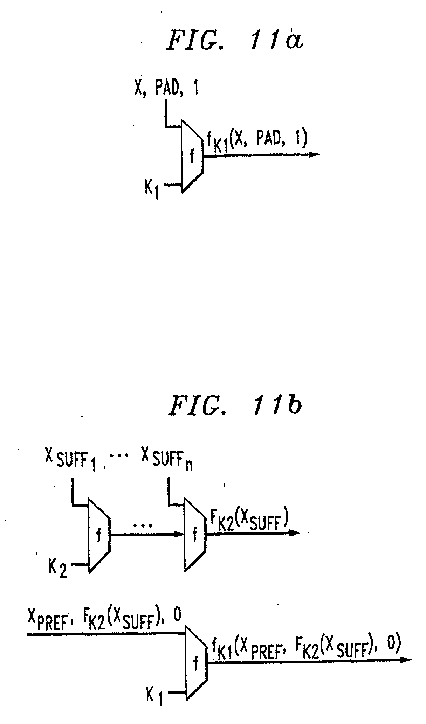

The generic description described above can be used to provide improved performance over prior art MAC generation techniques. For example, to enable improved efficiency over NMAC for short messages and also somewhat greater efficiency for larger messages, the following MAC construction is provided. Recall that $f_k(x)$ is the compression function whose input block size is b bits and the output size is t bits, and the size of the chaining variable and hence the key size is also t bits. As shown in FIGs. 11a and 11b, a particular embodiment of the construction for a MAC according to the principles of the present invention is as follows:

$$ENMAC_k(x) = f_{k1}(x, pad, 1) \qquad \text{if } |x| <= b - 2 \text{ bits}$$
$$= f_{k1}(x_{pref}, F_{k2}(x_{suff}), 0) \qquad \text{else,}$$

where, in the first case, the first b-2 bits in the block are used to hold the message x. If the message x does not fill the first b-2 bits, then padding is required and the remaining block, except the last bit is filled with a mandatory 1 followed by 0's (possibly none). In the case that the message is b-2 bits long, the b-1th bit is set to 1. In this embodiment, the last bit of the block indicates whether a single compression call is used for ENMAC. The last bit of the block is set to 1 in the single compression call case and is set to 0 when multiple calls or iterations of the compression function f are required. In the second case where things will not fit in one block, the string x is broken into two portions or segments $x_{pref}$ and $x_{suff}$, where

$$x_{pref} = x_1 \ldots x_{b-t-1}, \text{ and}$$
$$x_{suff} = x_{b-t} \ldots x_{|x|}.$$

First, $x_{suff}$ is hashed using a key value k2 to produce the t bit result of $F_{k2}(x_{suff})$. Then, an outer compression call is performed using a key value k1 where the first b-t-1 bits are set to $x_{pref}$ and the next t bits are set to the result $F_{k2}(x_{suff})$, and the last bit is set to zero.

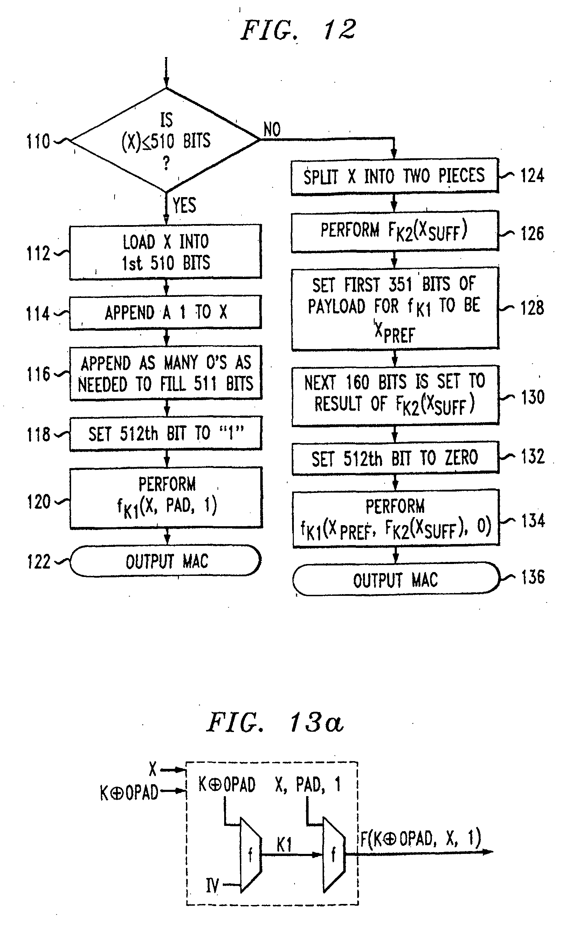

The ENMAC construction described above can use a SHA-1 hash function as the underlying cryptographic hash function as described below with particular reference to FIG. 12. As shown in block 110, the processing circuitry implementing the ENMAC construction determines if the length of x, $|x|$, is less than or equal to 510 bits. If so, the processing circuitry proceeds to step 112 to form the 512 bit payload of $f_{k1}()$ by loading x into the first 510 bits. Then, a "1" is appended to x at block 114, and as many 0's as needed (possibly none) are used to fill the 511 bits at block 116. If $|x|$ is less than 510 bits, then zeroes will be padded beyond the 1 or else if $|x|$ is 510 bits, then no zeroes pre padded and only a single 1 is appended at the 511th bit position at the block 114. At block 118, the last 512th bit (block indicator bit) is set to one to indicate that the message fits in a single block. At block 120, the keyed compression function $f_{k1}(x, pad, 1)$ is performed using the key k1 as the 160 bit chaining variable and the message x, the padding bit(s) and the block indicator bit as the 512 bit payload or input block. Subsequently the result $f_{k1}(x, pad, 1)$ is output and used to provide the MAC at block 122.

If, at block 110, the message x is greater than 510 bits, the processing circuitry proceeds to block 124 where the message is split into two portions $x_{pref}$ and $x_{suff}$ where $x_{pref} = x_1 ... x_{351}$ and $x_{suff} = x_{352}...x_{|x|}$. Then, at block 126, the processing circuitry performs the keyed hash function $F_{k2}$ using the key k2 and the message portion $x_{suff}$ with any additional padding bit(s) and/or bit field(s) as the payload to achieve the 160 bit result of $F_{k2}(x_{suff})$. At block 128, the first 351 bits of the payload of the outer compression function $f_{k1}$ is set to be $x_{pref}$, and at block 130, the next 160 bits of the payload is set to be the result of $F_{k2}(x_{suff})$ calculated in block 126. The last 512th bit of the payload is set to 0 at block 132. Finally, at block 134, the outer keyed compression function $f_{k1}$ is applied to the 512 bit payload formed at blocks 128 to 132 and the result $f_{k1}(x_{pref}, F_{k2}(x_{suff}),0)$ is output at block 136 for producing a MAC.

Table 2 below compares the number of compression calls required by the underlying hash function, SHA-1, and by ENMAC for short messages varying in sizes of 30 byte increments. A significant difference exists between table 2 and the previous table 1 which compared plain NMAC. For many of the short sizes, NMAC has the same efficiency as the underlying hash function. For larger messages the efficiency of NMAC, ENMAC and the underlying hash function will not be significantly different from each other. For messages of size 480 bits, the entry in Table 2 surprisingly indicates that the ENMAC is more efficient than the underlying hash function. This anomaly occurs because the underlying SHA-1 function reserves 64 bits for the size information while ENMAC reserves only 2 bits for messages less than 510 bits. Thus, the savings resulting from using ENMAC are significant for messages that fit in one or few blocks.

Table 2:

| Comparison in number of compression calls for short messages of various sizes. | | | |
|---|---|---|---|
| x in 240 bit increments | # of f in F (x) | # of f in ENMAC | % inefficiency |
| | | | |
| 240 | 1 | 1 | 0% |
| 480 | 2 | 1 | -50% |
| 720 | 2 | 2 | 0% |
| 960 | 3 | 3 | 0% |
| 1200 | 3 | 3 | 33% |
| 1440 | 3 | 4 | 33% |
| 1680 | 4 | 4 | 0% |
| 1920 | 4 | 5 | 25% |
| 2160 | 5 | 5 | 0% |
| 2400 | 5 | 6 | 20% |

If a different key $k_3$ were used to MAC messages which fit in one block and use key $k = (k_1, k_2)$ to MAC larger messages using NMAC then we could argue the system would be secure. Essentially, this is what is being done, but instead of using a different key to create a different MAC, the trailing bit is being set to 1 if the message fits in one block and its set to 0 for the other case. Secondly, whereas NMAC pads the payload of the outer compression call with zeros, ENMAC fits part of the message in the outer call.

ENMAC security results are similar to NMAC and which will be stated and proved below for pedagogical purposes.

Theorem 2. In t steps and q queries if the keyed compression function f is an $\varepsilon_f$ secure MAC, and the keyed iterated hash F is $\varepsilon_F$ weakly collision-resistant then the ENMAC function is $(\varepsilon_f + \varepsilon_F)$ secure MAC.

Proof: Suppose an adversary $A_E$ is successful against ENMAC with probability $\varepsilon_E$ assuming t time steps and q adaptively chosen queries to the ENMAC function. This adversary is used to build another adversary $A_f$ which will forge a MAC associated with the keyed compression function bn a previously unqueried message. This probability of breaking the MAC is bound in terms of $\varepsilon_E$ and $\varepsilon_F$, the best probability of an adversary finding a collision in the hash function F in time t and q queries. The probability of breaking the MAC in this particular way, using $A_E$, has to be less than the best probability of breaking the MAC in any way, $\varepsilon_f$. This can be used to get a bound on $\varepsilon_E$. The algorithm $A_f$ used to forge the keyed compression MAC is set out below.

Choose random $k_2$

For i...q

    $A_E \rightarrow x_i$

    If $x_i < b - 2$

        $A_E \leftarrow f_{k1}(xi, pad, 1)$

else

$A_E \leftarrow f_{k1}(1, x_{i,pref}, F_{k2}(x_{i,suff}), 0)$

$A_E \rightarrow (x, y)$

If $x < b - 2$

output $(x, pad, 1), y$

else

output $(x_{pref}, F_{k2}(x_{suff}), 0), y$

Let $\varepsilon_E = \varepsilon_{E1} + \varepsilon_{E+}$ where $\varepsilon_{E1}$ is the probability that ENMAC is attacked and the ENMAC message forged by $A_E$ is about one block size, or to be precise less than b - 2 bits. And let $E_+$ be the event and $\varepsilon_{E+}$ be the probability that ENMAC is attacked and the ENMAC message forged by $A_\varepsilon$ is larger than one block size. Furthermore, $\varepsilon_{E+} = \varepsilon_{E+,pref\neq} + \varepsilon_{E+pref=}$ where $\varepsilon_{E+pref\neq}$ is the probability that the ENMAC is forged with a multi block message and the prefix of the message does not equal the prefix of any of the messages previously queried by $A_E$. And $\varepsilon_{E+pref=}$ is the probability that the ENMAC is forged with a multi block message and the prefix of the message is equal to the prefix of some previously queried messages by $A_E$. In this case, the suffix of the forged message has to be different than the suffix of the messages with the same prefix.

$$P[\text{forging MAC of f}] = P[\text{MAC of f forged via } E_1] + P[\text{MAC of f forged via } E_+] \quad (1)$$

$$= \varepsilon_{E1} + P[\text{MAC of f forged via } E_+]$$

$$= \varepsilon_{e1} + P[\text{MAC of f forged via } E_{+,pref\neq}]$$

$$+ P[\text{MAC of f forged via } E_{+,pref=}] \quad (2)$$

$$= \varepsilon_{E1} + \varepsilon_{E+,pref\neq} + P[\text{MAC of f forged via } E_{+,pref=}]$$

$$= \varepsilon_{E1} + \varepsilon_{E+,pref\neq} + P[E_{+,pref=} \cap \text{no suffix collision in set with same prefixes}] \quad (3)$$

$$= \varepsilon_{E1} + \varepsilon_{E+,pref\neq} + 1 - P[\widetilde{E}_{+,pref=} \cup \text{suffix collision in set with same prefixes}] \quad (4)$$

$$= \varepsilon_{E1} + \varepsilon_{E+pref\neq} + 1 - P[E_{+,pref=}] - P[\text{collision in set}] + P[\widetilde{E}_{+,pref=} \cap \text{collision in set}]$$

$$\geq \varepsilon_{E1} + \varepsilon_{E+,pref\neq} + 1 - P[\widetilde{E}_{+,pref=}] - P[\text{collision in set}] \quad (5)$$

$$\geq \varepsilon_{E1} + \varepsilon_{E+,pref\neq} + 1 - 1 + \varepsilon_{E+pref=} - P[\text{collision in q queries}] \quad (6)$$

$$\geq \varepsilon_{E1} + \varepsilon_{E+,pref\neq} + 1 - 1 + \varepsilon_{E+,pref=} - \varepsilon_F$$

$$\geq \varepsilon_{E1} + \varepsilon_{E+} - \varepsilon_F$$

$$\geq \varepsilon_E - \varepsilon_F \quad (7)$$

$$e_f \geq P[\text{forging MAC of f via forging ENMAC}] \geq \varepsilon_E - \varepsilon_F \quad (8)$$

$$e_f \geq \varepsilon_E - \varepsilon_F$$

$$\text{therefore} \quad e_E \leq \varepsilon_f + \varepsilon_F \quad (9)$$

Equation 1 breaks the probability of forging a new MAC of f in to the probability of forging a new MAC of f via forging a ENMAC MAC, either single block or multiple blocks. The probability of breaking f via breaking a multiple block ENMAC is broken in equation 2 into the case of no prefix being equal to any other prefix on all queried messages and the case of some prefix being the same among the queried messages. In equation 3, the probability that the MAC of f is forged via $E_{+,pref=}$ is equated to the case of the probability of $E_{+,pref=}$ happening and no collisions in the hash of the suffix occurring among the messages with the same prefixes. Equation 4 is rewriting of equation 3 using Demorgan's

9

Law. In equation 6, the probability of collision among the set with the same prefix is replaced by the probability of collision with all q queries. Equation 9 is our desired result that the probability of forging ENMAC, $\varepsilon_E$ is less than $\varepsilon_f$, the probability of forging the MAC plus $\varepsilon_F$, the probability of finding a collision.

Since, in practice, data is often processed in bytes, it may be appropriate to perform the single block case when the length of the message x is less than b-8 bits rather than the b-2 bits specified above. In the case of multiple block ENMAC, forming $x_{suff}$, beginning at a non-word boundary may cause a re-aligning of all the words in $x_{suff}$. This can be avoided by using a different variant of ENMAC as follows using bytes sizes rather than bits for practical purposes.

$$ENMAC_k(x) = f_{k1}(x, pad, 1) \qquad \text{if } |x| <= 504 \text{ bits}$$
$$= f_{k1}(F_{k2}(x_{pref}), x_{suff}, 0) \qquad \text{else,}$$

where for SHA-1 as the underlying cryptographic hash function f,

$$x_{pref} = x_1...x_{|x|-344}, \text{ and}$$
$$x_{suff} = x_{|x|-343}...x_{|x|}.$$ For messages of length up to 63 bytes (504 bits) and in addition to any additional padding of a 1 followed by 0's to pad the message to 504 bits, the last byte is reserved for the block indicator or "X0000001" where a one indicates a single block message and the X can be a "1" following a 504 bit unpadded message. For unpadded messages less than 504 bits, the X is a "0". For messages greater than 504 bits, the message is divided into portions $x_{pref}$ and $x_{suff}$. Where the length of $x_{suff}$ is 43 bytes (344 bits) and the length of $x_{pref}$ = length of message - 344 bits.

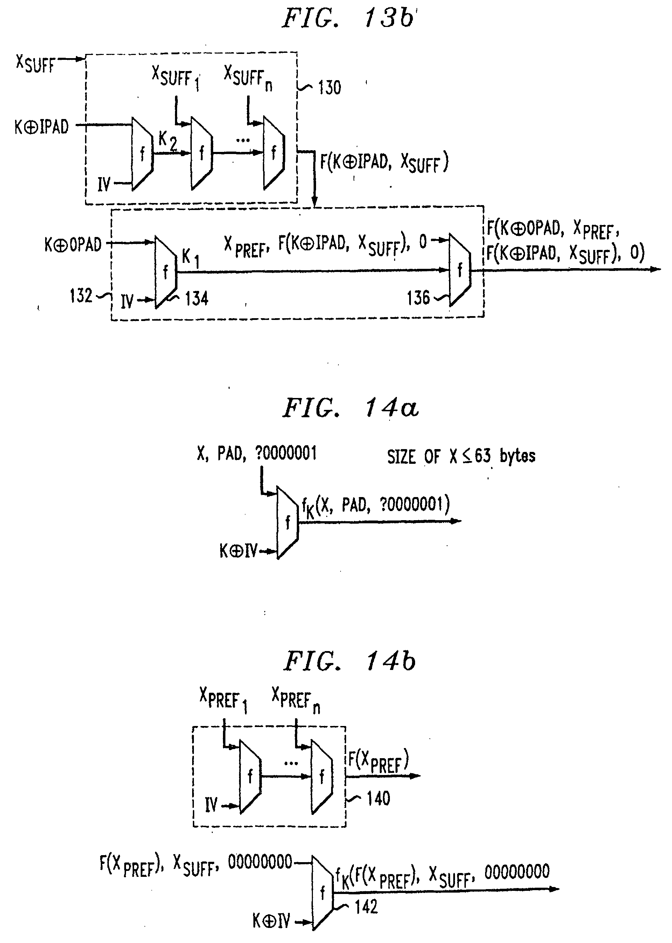

In addition to the embodiment(s) described above, the message authentication system according to the principles of the present invention can omit and/or add input parameters and/or compression and/or hash functions or other operations, key values and/or use variations or portions of the described system. For example, FIGs. 13a and 13b shows an embodiment of the message authentication system used as an enhanced HMAC system as follows.

$$EHMAC_k(x) = F(k \oplus opad, x, 1) \qquad \text{if } |x| <= b - a - 1 - \text{other fields}$$
$$= F(k \oplus opad, x_{pref}, F(k \oplus ipad, x_{suff}), 0) \qquad \text{else.}$$

In the first case of FIG. 13a, the message x fits in the single block. This means that the message x has to be smaller than b-1- other fields, where other fields may include some bits due to padding and/or length appending schemes of the hash function F. Assuming x is small enough, then a larger input is formed whose first part is $k \oplus opad$, followed by x, which in turn is followed by a bit set to 1. This larger message is inputted to the underlying hash function F. Looking inside F, we see that first a key k1 is created by calling the compression function $f(k \oplus opad)$, where k may have to be padded to the appropriate length. The result is used as the chaining variable for the next call to the compression function whose payload is (x,1) padded and/or length appended according to the specifications of the hash function F.

In FIG.13b, where the message x along with additional required fields will not fit in one block, the string x is broken into two portions or segments $x_{pref}$ and $x_{suff}$, where

$$x_{pref} = x_1...x_{b-t-1-other}, \text{ and}$$
$$x_{suff} = \text{rest of } x$$

First, in an inner hash function 130, a bitwise exclusive-or is performed between key k and ipad to produce k2 which is used as the chaining variable along with the input block $x_{suff1}$. The compression function f is called until block $x_{suffn}$ is input into the last compression function with any padding, appended length fields or other fields to produce the result of the hash function for $F(k \oplus ipad, x_{suff})$ where k may have to be padded to the appropriate length. At an outer hash function 132, the key k1 is determined by calling a compression function 134 with the value IV as the chaining variable and $k \oplus opad$ as an input. The value k1 is used as the chaining variable for a compression function 136 with the input set to $x_{pref}$ prepended to $F(k \oplus ipad, x_{suff})$, and appended with a zero. The result $F(k \oplus opad, x_{pref}, F(k \oplus ipad, x_{suff}), 0)$ can be used to provide the MAC.

FIGs. 14a and 14b show yet another embodiment of the message authentication system used as an SMAC system as described below in the context of a specific example implementation in terms of bytes.

$$SMAC(x) = f_K( x, pad, 1 ) \qquad \text{if } |x| <= 63 \text{ bytes}$$
$$= f_K( F(x_{pefix}), x_{suffix}, 0) \qquad \text{if } |x| > 63 \text{ bytes}$$
$$x_{pref}: \text{bytes } x_1 .... x_{|x|-43}$$
$$x_{suff}: \text{bytes } x_{|x|-42} .... x_{|x|}$$

As with the other embodiments, SMAC consists of two cases : the single block (<= 63 bytes) case of FIG. 14a and the multiple-block case (> 63 bytes) of FIG. 14b. In both cases a call to a keyed compression function f, such as a SHA function, is made. In the single block case, no other function calls are required. However, in the multi-block case, a unkeyed hash function F 140, such as the standard SHA1_HASH, is applied to the beginning part of the message $x_{pref}$. Then the hash result and the remaining message are fit into an input or payload block and a call to a keyed compression function f 142 is made. More details of the loading of the SHA-1 compression function f are shown in Table 3 and 4 below.

As shown, the last, 512th, bit of the sha1 compression function is used as the "single block indicator bit" and is set to 1 in the single-block case and is set to 0 in the multiple-block case. Since the message is processed in byte multiples in this embodiment, none of the remaining bits in the last byte can be used to process the message. Hence, the entire last byte (64th) of the compression function is reserved. In the multiple-block case, the bits 505-511 are also set to zero as shown in Table 4. For the single-block case, bits 506-511 are set to zero; however, the 505th bit is used as an extra pad bit whose function will become clear once the padding scheme used in the single block case is explained.

Messages that partially fill a block require a padding method. The multiple-block case does not require a padding method to fill the compression function since the block is completely filled, as shown in Table 4. However, the SHA1_HASH function does use its own padding when hashing $x_{pref}$. To pad messages in the single-block case, a 1 is appended to the message and then as many zeroes, possibly none, are appended until the remaining bits in the block are filled, or more precisely, until the 505th bit is filled. As an example, in the special case that the single block message is 63 bytes or 504 bit long, a 1 is added to the 505th bit. The remaining bits 506-512 were filled as described previously.

In the multiple-block case, the hash function F 140 is applied in blocks $x_{pref1}$ to $x_{prefn}$ to all but the last 43 bytes of the message which outputs a 20 byte digest. The last 43 bytes are not processed in the hash function F so that they can be processed by the compression function f 142. The reason for 43 bytes is that out of 64 bytes available, the first 20 bytes will be used to load the digest and the last byte is specially reserved as shown in Table 4 for the SHA-1 hash function and SHA-1 compression function.

| 1st byte | 2nd byte | | 62nd byte | 63rd byte | 64th byte Specially Set | | | | | | | |
|---|---|---|---|---|---|---|---|---|---|---|---|---|
| | | | | | 505 | 506 | 507 | 577 | 579 | 510 | 511 | 512th bit |
| $x_1$ | $x_2$ Or Pad | . . . . . . . . . | $x_{62}$ Or pad | $x_{63}$ or pad | P a d b i t | 0 | 0 | 0 | 0 | 0 | 0 | 1 single block indicator bit |

Table 3: Single Block Case -Loading of sha1 compression function

$$Y_1...Y_{20} = \text{SHA-HASH}(x_1...x_{|x|-43})$$

| 1st byte | 2nd byte | .... | 20th byte | 21st byte | ........ | 62nd byte | 63rd byte | 64th byte Specially Set | | | | | | | |
|---|---|---|---|---|---|---|---|---|---|---|---|---|---|---|---|
| | | | | | | | | 505 | 506 | 507 | 507 | 509 | 510 | 511 | 512th bit |
| $Y_1$ | $Y_2$ | .... | $Y_{20}$ | $x_{|x|-42}$ | ........ | $x_{|x|-1}$ | $x_{|x|}$ | 0 | 0 | 0 | 0 | 0 | 0 | 0 | 0 single block indicator bit |

Table 4: Multiple Block Case – Loading of sha1 compression function

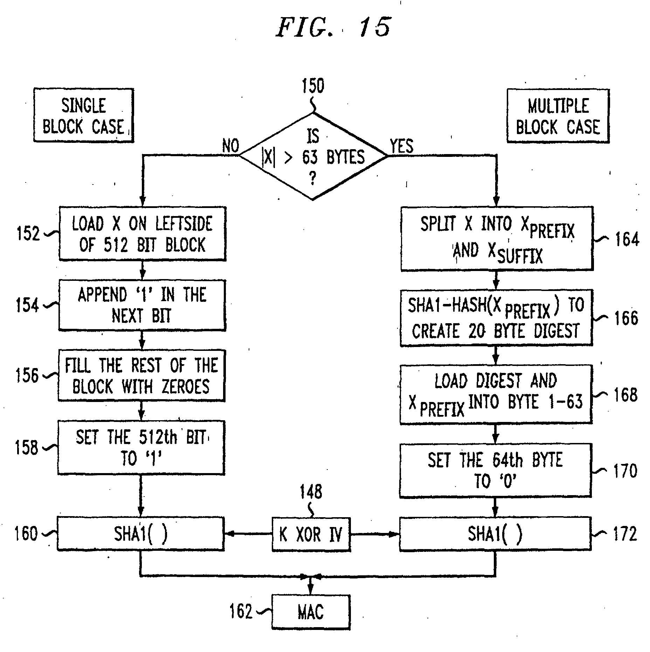

FIG. 15 shows a flow diagram for the SMAC construction. Initially, the key is XORed with the IV and loaded into the chaining variable of sha1 compression function as shown in block 148. At block 150, processing circuitry makes a determination whether $|x| > 63$ bytes. If not, the processing circuitry proceeds to the single block case where the message x is loaded into the left side of the 512 bit block of the compression function f at block 152. At block 154, the processing circuitry appends '1' into the next bit. At block 156, the rest of the block is filled with zeroes until the last 512th bit which is set to 1 at block 158. At block 160, the compression function f is called using the chaining variable (K XOR IV) and the payload from blocks 152-158. The 20 byte MAC is returned at block 162.

At block 150, if $|x| > 63$ bytes, the processing circuitry proceeds to the multiple block case. At block 164, the message x is split into two pieces: $x_{pref}$: bytes $x_1 .... x_{|x|-43}$ and $x_{suff}$: bytes $x_{|x|-42} .... x_{|x|}$. At block 166, the SHA1_HASHfunction is called with $x_{pref}$ and a 20 byte result is produced. At block 168, the 20 byte result is loaded into the left side of the 64 byte block of the sha1 compression function, and $x_{suff}$ is added to bytes 21 to 63. At block 170, the last 64th byte is set to 0. Finally, at block 172, the sha1 compression function is called using chaining variable calculated initially (K XOR IV) and the payload from blocks 168 and 170. The 20 byte MAC is returned at block 162.

SMAC is closer to NMAC than HMAC, hence we will compare it to NMAC rather than HMAC. NMAC has an inner call to the hash function F and an outer call to the compression function f. SMAC does the same for messages larger than 63 bytes, but skips the hash call for smaller messages. For longer messages, SMAC processes some part of the message in the outer compression call, thus reducing the text processed by the internal hash function call. NMAC does not do this, but instead fills the rest of the outer compression calls payload with zeroes. In NMAC, the inner hash function is keyed whereas SMAC does not key the internal call. SMAC's internal call can be keyed, but for efficiency purposes was not done so in this embodiment. The security is not fundamentally effected because it is believed infeasible to find a collision even in the keyless SHA1_HASH function.

The following is the code which could be used to implement the SMAC.

Outputs to internal stored data:

        MAC                         32 bits

```
/* smac calls following functions: */
    sha1_comp( unsigned char cv[20], unsigned char temp[64], unsigned char adigest[20])
    {  /* sha1_comp is the sha1 compression function, cv is the 160 bit chaining variable, temp is the 512
          bit payload, and the result is output in the 160 bit adigest. */
        . . . . . .
    }


    SHA1_HASH( unsigned char *M, int textlen, unsigned char adigest[20])
    {  /* SHA1_HASH is  the hash function, M is the message, textlen is the number of bytes in message
          and the result is output in the 160 bit adigest */
        . . . . . . .
    }
smac( int keylen, unsigned char *K, int textlen, unsigned char *M, unsigned char mac[20])
```

```
{ int i,j ;
   unsigned char cv[20], temp[64];
      /* set 20byte chaining variable cv to default IV0 as defined in fips180*/
         cv[0]=0x67; cv[1]=0x45; cv[2]=0x23; cv[3]=0x01; cv[4]=0xef; cv[5]=0xcd;
         cv[6]=0xab; cv[7]=0x89; cv[8]=0x98; cv[9]=0xba; cv[10]=0xdc; cv[11]=0xfe;
         cv[12]=0x10; cv[13]=0x32; cv[14]=0x54; cv[15]=0x76; cv[16]=0xc3;
   cv[17]=0xd2;
         cv[18]=0xe1; cv[19]=0xf0;
      /* XOR keys on to chaining variable */
         for(i=0;i<keylen;i++)
            cv[i] = cv[i] ^ K[i];
      /* set temp compression block to be all zeroes */
         for (i=0; i<64; i++)  temp[i]=0;
      if ( textlen <= 63 ) {
         /* load the message to the leftmost side */
         for(i=0; i<textlen; i++)
               temp[i] = M[i];
         temp[i] = 0x80;              /*append '1', rest of bits are previousl set to
0*/
         temp[63]=temp[63] | 0x01;       /* set 512th bit to '1' */
         sha1_comp(cv, temp,mac);
      }
      else { /* textlen > 63 */
         /* SHA1_HASH on prefix of M */
         SHA1_HASH( M, textlen-43, mac);
         for(i=0;i<20;i++)
               temp[i]=mac[i];           /* copy digest to the leftmost side.*/
         for(i=20;i<63;i++)
               temp[i]=M[textlen-43+(i-20)]; /* next copy suffix of M.        */
         temp[63]=0x00;                 /* set last byte to be zero.      */
         sha1_comp(cv, temp, mac);
      }
   }
```

The MAC system has been described as being used with particular hash or compression functions, such as SHA-1, but other hash functions or related cryptographic functions can be used as well as different or additional functions. Additionally, particular bit or byte values for the message, payloads, chaining variables and key values have been described, but depending on the embodiments, these numbers can change. Furthermore, the key values can be a key, derived from a key or portion(s) thereof. It should be understood that different notations, references and characterizations of the various values, inputs and architecture blocks can be used. For example, the term compression function f is used and hash function F is used where the iterated hash function F is constructed using iterating or chained compression functions f. It should be understood that a compression function is also a hash function.

In alternative embodiments, the functionality described for the message authentication system can be performed with processing circuitry at a home authentication center, home location register (HLR), a home MSC, a visiting authentication center, a visitor location register (VLR) and/or in a visiting MSC. Moreover, the message authentication system and portions thereof can be performed in a wireless unit, a base station, base station controller, MSC, VLR, HLR or other sub-system of a wireless communications system. Depending on the embodiment, the MAC can be sent in association with the message, and the MAC is compared and/or verified with a MAC generated at the receiving end. Additional functionality can alter or transform the MAC before it is sent in association with the message, and the same functionality can be performed on the MAC generated at the receiving end for comparison and/or verification (message authentication). Finally, the MAC could be sent, and additional functionality alters or transforms the received MAC and the MAC generated at the receiving end to perform message authentication. An example of additional functionality could be using the 32 least significant bits of the MAC for any comparisons or verification functions in performing message authentication. As such, the MAC and/or altered or transformed MAC can be referred to as MAC or tag.

Additionally, although the message authentication system is described in the context of wireless communications system, the message authentication system can be used to verify the integrity of or authenticate a communications message sent from a sending point to a receiving point over any network or communications medium. It should be understood that the system and portions thereof and of the described architecture can be implemented in or integrated with processing circuitry in the unit or at different locations of the communications system, or in application specific integrated circuits, software-driven processing circuitry, programmable logic devices, firmware, hardware or other arrangements of discrete components as would be understood by one of ordinary skill in the art with the benefit of this disclosure. What has been described is merely illustrative of the application of the principles of the present invention. Those skilled in the art will readily recognize that these and various other modifications, arrangements and methods can be made to the present invention without strictly following the exemplary applications illustrated and described herein and without departing from the scope of the present invention as claimed.

**Claims**

1. A method of processing a message for authentication using a compression function (90) and a nested hash function including an inner hash function (100) and an outer hash function (102) whereby said inner hash function (100) produces a result to said outer hash function (102), said method **CHARACTERIZED BY**:

    performing a single iteration of said compression function (90) using a key (K) and said message (X) as inputs if said message (X) fits within an input block of said compression function (90); and

    if said message is larger than said input block of said compression function (90), providing said message (X) and a key to said nested hash function to process said message (X).

2. The method of claim 1 including the steps of:

    performing a hash function as said inner hash function (100) using a first portion (portion 2) of said message as an input to achieve said result; and
    performing a keyed hash function (102) as said outer hash function using said second portion (portion 1) of said message and said result as inputs.

3. The method of claim 2 wherein said hash function is an iterated hash function F and said keyed hash function is a keyed compression function f.

4. The method of claim 2 wherein said hash function is an iterated hash function F and said keyed hash function is an iterated hash function F.

5. The method of claim 1 including the steps of:

    using a result from said compression function to produce a message authentication code (TAG); and
    sending said message authentication code (TAG) in association with said message (MESSAGE) for authenticating said message using said message authentication code (TAG).

6. The method of claim 1 including the steps of:

    using a result from said compression function to produce a message authentication code (TAG'); and
    comparing said message authentication code (TAG') to a received message authentication code (TAG) received with said message (MESSAGE), whereby said message is authentic if said message authentication code (TAG') and said received authentication code (TAG) match.

7. A message authentication system which uses a compression function (90) and a nested hash function including an inner hash function (100) and an outer hash function (102) whereby said inner hash function (100) produces a result to said outer hash function (102), said system **CHARACTERIZED BY**:

processing circuitry adapted to perform a single iteration of said compression function (90) using a key (K) and said message (X) as inputs if said message (X) fits within an input block of said compression function (90) and, if said message is larger than said input block of said compression function (90), to provide said message (X) and a key to said nested hash function to process said message (X).

**Patentansprüche**

1. Verfahren zum Verarbeiten einer Nachricht zur Authentifizierung unter Verwendung einer Komprimierungsfunktion (90) und einer vernesteten Hash-Funktion mit einer inneren Hash-Funktion (100) und einer äußeren Hash-Funktion (102), wodurch die innere Hash-Funktion (100) ein Ergebnis für die äußere Hash-Funktion (102) produziert, **gekennzeichnet durch** die folgenden Schritte:

   Durchführen einer einzigen Iteration der Komprimierungsfunktion (90) unter Verwendung eines Schlüssels (K) und der Nachricht (X) als Eingaben, wenn die Nachricht (X) in einen Eingangsblock der Komprimierungsfunktion (90) paßt; und

   wenn die Nachricht größer als der Eingangsblock der Komprimierungsfunktion (90) ist, Zuführen der Nachricht (X) und eines Schlüssels zu der vernesteten Hash-Funktion, um die Nachricht (X) zu verarbeiten.

2. Verfahren nach Anspruch 1, mit den folgenden Schritten:

   Durchführen einer Hash-Funktion als die innere Hash-Funktion (100) unter Verwendung eines ersten Teils (Teil 2) der Nachricht als Eingabe, um das Ergebnis zu erreichen; und
   Durchführen einer Schlüssel-Hash-Funktion (102) als die äußere Hash-Funktion unter Verwendung des zweiten Teils (Teil 1) der Nachricht und des Ergebnisses als Eingabe.

3. Verfahren nach Anspruch 2, wobei die Hash-Funktion eine iterierte Hash-Funktion F und die Schlüssel-Hash-Funktion eine Schlüssel-Komprimierungsfunktion f ist.

4. Verfahren nach Anspruch 2, wobei die Hash-Funktion eine iterierte Hash-Funktion F und die Schlüssel-Hash-Funktion eine iterierte Hash-Funktion F ist.

5. Verfahren nach Anspruch 1, mit den folgenden Schritten:

   Verwenden eines Ergebnisses der Komprimierungsfunktion, um einen Nachrichtenauthentifizierungscode (TAG) zu erzeugen; und
   Senden des Nachrichtenauthentifizierungscodes (TAG) in Assoziation mit der Nachricht (MESSAGE) zur Authentifizierung der Nachricht unter Verwendung des Nachrichtenauthentifizierungscodes (TAG).

6. Verfahren nach Anspruch 1, mit den folgenden Schritten:

   Verwenden eines Ergebnisses der Komprimierungsfunktion, um einen Nachrichtenauthentifizierungscode (TAG') zu erzeugen; und
   Vergleichen des Nachrichtenauthentifizierungscodes (TAG') mit dem Nachrichtenauthentifizierungscode (TAG) einer empfangenen Nachricht, der mit der Nachricht (MESSAGE) empfangen wird, wodurch die Nachricht authentisch ist, wenn der Nachrichtenauthentifizierungscode (TAG') und der Nachrichtenauthentifizierungscode (TAG) übereinstimmen.

7. Nachrichtenauthentifizierungssystem, das eine Komprimierungsfunktion (90) und eine vernestete Hash-Funktion mit einer inneren Hash-Funktion (100) und einer äußeren Hash-Funktion (102) verwendet, wodurch die innere Hash-Funktion (100) ein Ergebnis für die äußere Hash-Funktion (102) produziert, wobei das System durch folgendes gekennzeichnet ist:

   Verarbeitungsschaltkreise, die so ausgelegt sind, daß sie eine einzige Iteration der Komprimierungsfunktion (90) unter Verwendung eines Schlüssels (K) und der Nachricht (X) als Eingaben durchführen, wenn die Nachricht (X) in einen Eingangsblock der Komprimierungsfunktion (90) paßt, und die Nachricht (X) und einen Schlüssel der vernesteten Hash-Funktion zuführen, um die Nachricht (X) zu verarbeiten, wenn die Nachricht

**EP 1 257 084 B1**

größer als der Eingangsblock der Komprimierungsfunktion (90) ist.

**Revendications**

1. Procédé de traitement d'un message à authentifier en utilisant une fonction de compression (90) et une fonction de hachage emboîtée comportant une fonction de hachage interne (100) et une fonction de hachage externe (102) par lequel ladite fonction de hachage interne (100) produit un résultat transmis à ladite fonction de hachage externe (102), ledit procédé étant **CARACTERISE PAR** :

   l'exécution d'une itération unique de ladite fonction de compression (90) en utilisant une clé (K) et ledit message (X) comme entrées si ledit message (X) entre dans un bloc d'entrée de ladite fonction de compression (90) ; et

   si ledit message est plus grand que ledit bloc d'entrée de ladite fonction de compression (90), la fourniture dudit message (X) et d'une clé à ladite fonction de hachage emboîtée afin de traiter ledit message (X).

2. Procédé selon la revendication 1, comportant les étapes :

   d'exécution d'une fonction de hachage comme dite fonction de hachage interne (100) en utilisant une première partie (partie 2) dudit message comme entrée pour parvenir audit résultat ; et
   d'exécution d'une fonction de hachage à clé (102) comme dite fonction de hachage externe en utilisant ladite deuxième partie (partie 1) dudit message et ledit résultat comme entrées.

3. Procédé selon la revendication 2, dans lequel ladite fonction de hachage est une fonction de hachage itérée F et ladite fonction de hachage à clé est une fonction de compression à clé f.

4. Procédé selon la revendication 2, dans lequel ladite fonction de hachage est une fonction de hachage itérée F et ladite fonction de hachage à clé est une fonction de hachage itérée F.

5. Procédé selon la revendication 1, comportant les étapes :

   d'utilisation d'un résultat de ladite fonction de compression afin de produire un code d'authentification de message (TAG) ; et
   d'envoi dudit code d'authentification de message (TAG) en association avec ledit message (MESSAGE) pour authentifier ledit message en utilisant ledit code d'authentification de message (TAG).

6. Procédé selon la revendication 1, comportant les étapes :

   d'utilisation d'un résultat de ladite fonction de compression afin de produire un code d'authentification de message (TAG') ; et
   de comparaison dudit code d'authentification de message (TAG') à un code d'authentification de message reçu (TAG) reçu avec ledit message (MESSAGE), par lequel ledit message est authentique si ledit code d'authentification de message (TAG') et ledit code d'authentification reçu (TAG) correspondent.

7. Système d'authentification de message qui utilise une fonction de compression (90) et une fonction de hachage emboîtée comportant une fonction de hachage interne (100) et une fonction de hachage externe (102) par lequel ladite fonction de hachage interne (100) produit un résultat transmis à ladite fonction de hachage externe (102), ledit système étant **CARACTERISE PAR** :

   des circuits de traitement adaptés pour exécuter une itération unique de ladite fonction de compression (90) en utilisant une clé (K) et ledit message (X) comme entrées si ledit message (X) entre dans un bloc d'entrée de ladite fonction de compression (90) et, si ledit message est plus grand que ledit bloc d'entrée de ladite fonction de compression (90), pour fournir ledit message (X) et une clé à ladite fonction de hachage emboîtée afin de traiter ledit message (X).

17

## FIG. 1

*FIG. 2*

WIRELESS UNIT

WIRELESS COMMUNICATIONS SYSTEM

MESSAGE → MAC GENERATOR → TAG
K →
50

MESSAGE, TAG

MESSAGE → MAC GENERATOR 52 ← K

TAG′

TAG → SAME ? — NO → REJECT
54

YES

ACCEPT

*FIG. 3*

WIRELESS COMMUNICATIONS SYSTEM

WIRELESS UNIT

MESSAGE → MAC GENERATOR → TAG
K →
56

MESSAGE, TAG

MESSAGE → MAC GENERATOR 58 ← K

TAG′

TAG → SAME ? — NO → REJECT
60

YES

ACCEPT

## FIG. 4

b bits

a' bits → [f] → t bits

## FIG. 5

$X_1$    $X_2$    $\cdots$    $X_n$

IV → [f] → [f] → $\cdots$ → [f] → F(IV, X)

## FIG. 6

$X_1$    $X_2$    $\cdots$    $X_n$

K → [f] → [f] → $\cdots$ → [f] → F(K, X)

## FIG. 7

$X_1$    $X_2$    $\cdots$    $X_n$

$K_2$ → [f] → [f] → $\cdots$ → [f] → $F_{K2}(X)$

→ [F] → $F_{K1}(F_{K2}(X))$

$K_1$ →

## FIG. 8

K⊕IPAD  $X_1$   $X_n$

$K_2$

IV → f ... f F

F(K⊕IPAD, X)

K⊕OPAD → f

$K_1$

IV → f F

F(K⊕OPAD, F(K⊕IPAD, X))

## FIG. 9

X

90

f →

K →

## FIG. 10

X

PORTION 1 | PORTION 2

X

PORTION 2$_1$    PORTION 2$_n$ ‖PAD‖ LENGTH

100a     100n

f   ...   f → $F_{CV1}$ (PORTION 2)

CV2

$F_{CV1}$ (PORTION 2) | PORTION 1

102

f → $f_{CV1}$ (PORTION 1, $F_{CV2}$ (PORTION 2))

CV1

EP 1 257 084 B1

## FIG. 11a

X, PAD, 1

$f_{K1}(X, PAD, 1)$

$K_1$

## FIG. 11b

$X_{SUFF_1}, \cdots X_{SUFF_n}$

$\cdots$ $F_{K2}(X_{SUFF})$

$K_2$

$X_{PREF}, F_{K2}(X_{SUFF}), 0$

$f_{K1}(X_{PREF}, F_{K2}(X_{SUFF}), 0)$

$K_1$

## FIG. 12

110 — IS (X)≤510 BITS ?

NO

SPLIT X INTO TWO PIECES — 124

YES

112 — LOAD X INTO 1st 510 BITS

114 — APPEND A 1 TO X

116 — APPEND AS MANY 0'S AS NEEDED TO FILL 511 BITS

118 — SET 512th BIT TO "1"

120 — PERFORM $f_{K1}(X, PAD, 1)$

122 — OUTPUT MAC

126 — PERFORM $F_{K2}(X_{SUFF})$

128 — SET FIRST 351 BITS OF PAYLOAD FOR $f_{K1}$ TO BE $X_{PREF}$

130 — NEXT 160 BITS IS SET TO RESULT OF $F_{K2}(X_{SUFF})$

132 — SET 512th BIT TO ZERO

134 — PERFORM $f_{K1}(X_{PREF}, F_{K2}(X_{SUFF}), 0)$

136 — OUTPUT MAC

## FIG. 13α

X →

K⊕OPAD →

K⊕OPAD    X, PAD, 1

f    K1    f    F(K⊕OPAD, X, 1)

IV

*FIG. 13b*

X_SUFF →

X_SUFF₁    X_SUFFₙ     ~130

K⊕IPAD →

f   K₂   f   ...   f

IV →

F(K⊕IPAD, X_SUFF)

K⊕OPAD →

f   K₁   X_PREF, F(K⊕IPAD, X_SUFF), 0 →  f

132 ~   IV → ~ 134    136 ~

F(K⊕OPAD, X_PREF, F(K⊕IPAD, X_SUFF), 0)

---

*FIG. 14a*

X, PAD, ?0000001     SIZE OF X ≤ 63 bytes

f   $f_K$(X, PAD, ?0000001)

K⊕IV →

---

*FIG. 14b*

X_PREF₁    X_PREFₙ

f   ...   f   F(X_PREF)

IV →    ~ 140

F(X_PREF), X_SUFF, 00000000 →  f   $f_K$(F(X_PREF), X_SUFF, 00000000

K⊕IV →   ~ 142

## FIG. 15

```
                        150
  ┌──────────┐           ╱╲
  │  SINGLE  │          ╱  ╲                    ┌──────────┐
  │BLOCK CASE│   NO    ╱ IS ╲    YES            │ MULTIPLE │
  └──────────┘ ◄──────│|X| > 63 BYTES│─────────►│BLOCK CASE│
                       ╲    ?   ╱               └──────────┘
                        ╲      ╱
                         ╲    ╱
                          ╲  ╱
                           ╲╱
```

**SINGLE BLOCK CASE** (NO branch, left):

- 152 — LOAD X ON LEFTSIDE OF 512 BIT BLOCK
- 154 — APPEND '1' IN THE NEXT BIT
- 156 — FILL THE REST OF THE BLOCK WITH ZEROES
- 158 — SET THE 512th BIT TO '1'
- 160 — SHA1( )

**MULTIPLE BLOCK CASE** (YES branch, right):

- 164 — SPLIT X INTO $X_{PREFIX}$ AND $X_{SUFFIX}$
- 166 — SHA1-HASH($X_{PREFIX}$) TO CREATE 20 BYTE DIGEST
- 168 — LOAD DIGEST AND $X_{PREFIX}$ INTO BYTE 1-63
- 170 — SET THE 64th BYTE TO '0'
- 172 — SHA1( )

148 — K XOR IV

162 — MAC